# EUROPÄISCHE PATENTSCHRIFT

(11) **EP 3 931 895 B1**
(45) Veröffentlichungstag und Bekanntmachung des Hinweises auf die Patenterteilung: **07.06.2023**
(21) Anmeldenummer: 20707247.1
(22) Anmeldetag: 25.02.2020
(51) Int. Cl.: H01M 4/66

(54) **ALUMINIUMFOLIE FÜR BATTERIEELEKTRODEN UND VERFAHREN ZUR HERSTELLUNG**
ALUMINIUM FOIL FOR BATTERY ELECTRODES AND PRODUCTION METHOD
FEUILLE D'ALUMINIUM POUR ÉLECTRODES DE BATTERIE ET PROCÉDÉ DE FABRICATION

(30) Priorität: 25.02.2019 DE 102019104721
(43) Veröffentlichungstag der Anmeldung: 05.01.2022
(73) Patentinhaber: Speira GmbH, 41515 Grevenbroich (DE)
(72) Erfinder: DENKMANN, Volker, 47906 Kempen (DE); KEMPER, Bernd, 41515 Grevenbroich (DE); DRAESE, Stephan, 41334 Nettetal (DE); SEIFERTH, Oliver, 51143 Köln-Zündorf (DE); SIMMER, Jan, 40599 Düsseldorf (DE)
(74) Vertreter: Cohausz & Florack
(86) Internationale Anmeldenummer: PCT/EP2020/054907
(87) Internationale Veröffentlichungsnummer: WO 2020/173940

(56) Entgegenhaltungen:
- CN-B- 106 623 426
- KR-B1- 101 850 645
- US-A1- 2004 091 773

## Beschreibung

Die Erfindung betrifft eine Aluminiumfolie für Batterieelektroden, wobei die Aluminiumfolie aus einer Legierung des Typs AA 1xxx, AA 3xxx und/oder AA 8xxx besteht und wobei die Aluminiumfolie einen kaltverfestigten Zustand aufweist. Die Erfindung betrifft weiter ein Verfahren zur Herstellung einer Aluminiumfolie für Batterieelektroden.

Batterien wie Lithium-Ionen-Batterien werden insbesondere als Speichermedium für elektrische Energie in der Elektromobilität eingesetzt. Die Leistungsfähigkeit solcher Batterien ist abhängig von der Geschwindigkeit und Effizienz der Ladungs- und Massentransportvorgänge beim Entladen und Laden der Batterien. Die Transportvorgänge werden unter anderem von der Struktur der Elektroden in der Batterie bestimmt.

Elektroden und insbesondere die Kathoden umfassen häufig ein Substrat aus einer Metallfolie, welches zusätzlich eine Elektrodenbeschichtung bzw. eine Kathodenmasse an der Oberfläche aufweist. Die chemisch-physikalischen Vorgänge an der Grenzfläche zwischen dem Substrat und der Elektrodenbeschichtung haben sich hierbei als entscheidend für die Leistungsfähigkeit der Batterie herausgestellt. Zur Verbesserung der Eigenschaften der Batterie müssen daher die Oberflächeneigenschaften des Substrats in Hinsicht auf eine optimale Haftbarkeit der Elektrodenbeschichtung sowie eine möglichst sichere Kontaktierung angepasst werden.

Aluminiumfolien zur Verwendung in Batterieelektroden, welche als Substrat in Elektroden dienen, werden typischerweise über einen Walzprozess hergestellt. Aluminiumfolien werden während des Walzvorgangs in der Regel mit einem Kühlschmierstoff benetzt, um die Reibung im Walzspalt zu verringern, das Aluminium und die Walzen zu kühlen, den Walzenverschleiß zu verringern das Festkleben des Walzprodukts während des Walzens zu vermeiden.

Wird eine Beschichtung der Aluminiumfolie mit einem Elektrodenmaterial im walzfettigen, kaltverfestigten Zustand vorgenommen, kann die Restbelegung der Oberfläche mit dem Kühlschmierstoff und weiteren Rückstanden aus dem Walzprozess wie beispielsweise Partikel, Abrieb und Reaktionsprodukte zu Benetzungsproblemen und Haftungsproblemen der Elektrodenbeschichtung auf der Aluminiumfolie führen. Zudem kann die Kühlschmierstoffverteilung auf der Oberfläche der Aluminiumfolie nach dem Walzen stark ungleichmäßig sein, so dass Abschnitte mit lokal überhöhter Kühlschmierstoffbelegung ausgebildet werden, in welchen eine optimale Beschichtung und Kontaktierung nicht möglich ist.

Für die Verwendung von Aluminiumfolien für Batterien sollte daher der Kühlschmierstoff vor dem Beschichten mit der Elektrodenbeschichtung reduziert bzw. entfernt werden. Dazu kann beispielsweise die Aluminiumfolie bei niedrigen Temperaturen geglüht werden, um den verbliebenen Kühlschmierstoff zu verdampfen bzw. zu oxidieren, womit die Aluminiumfolie entfestigt wird. Vor allem beim Glühen mit niedrigen Temperaturen besteht jedoch die Gefahr, dass Rückstände des Kühlschmierstoffes auf der Aluminiumfolie verbleiben und so eine Weiterverarbeitung, beispielsweise ein Beschichten, problematisch ist. Insbesondere kann auch nach dem Glühen aufgrund einer ungleichmäßigen Belegung mit Kühlschmierstoff weiterhin eine lokal stark variierende Benetzbarkeit auftreten. Ebenso kann durch die Erwärmung der Aluminiumfolie die Oxidschicht an der Oberfläche aufwachsen, wobei insbesondere in den Randbereichen eine höhere Dicke der Oxidschicht entsteht. Durch die Abweichungen in der Oxidschichtdicke können nach dem Kalandrieren der Elektrodenbeschichtung unterschiedliche Übergangswiderstände an der Grenzfläche zur Aluminiumfolie entstehen. Zusätzlich fällt mit dem Glühen erheblicher Zeitaufwand an, wobei insbesondere bei niedrigen Temperaturen lange Glühzeiten zum Entfetten notwendig sind, und es entstehen erhöhte Kosten.

Ebenso können Aluminiumfolien chemisch entfettet werden, um die Oberfläche für eine Beschichtung zu konditionieren. Hierzu wird der Kühlschmierstoff in einer Beizentfettung entfernt und die Walzoxidschicht aufgelöst. Beim anschließenden Spülprozess entsteht eine dickere poröse Hydroxidschicht an der Oberfläche der Aluminiumfolie. Diese entsprechend konditionierten Aluminiumfolien zeichnen sich durch homogene Oberflächeneigenschaften und durch hohe Benetzbarkeiten aus, womit die Folien auch für eine Beschichtung mit wasserbasierten Suspensionen geeignet sind. Bei dieser chemischen Entfettung entstehen jedoch auch vergleichsweise hohe Prozesskosten.

Als alternative Oberflächenbehandlung zur Entfettung und Konditionierung der Oberfläche kann eine Flammentfettung der Aluminiumfolie vorgenommen werden. Die mit der Flammentfettung notwendigen hohen Energieeinträge können jedoch zu einer unerwünschten Entfestigung der Aluminiumfolie und zu einem signifikanten Aufwachsen der Oxidschicht führen, woraus eine schlechtere Kontaktierung der Oberfläche der Aluminiumfolie folgt. Ähnliche Ergebnisse ergeben sich durch eine NIR- und eine Plasmabehandlung.

Die CN 106 623 426 B offenbart ein Verfahren zur Verbesserung der Benetzungsspannung von Aluminiumfolie mit einer mehrstufigen Koronabehandlung.

Aus der KR 101 850 645 B1 ist ein Stromabnehmer für eine Kathode einer Lithiumbatterie und ein Herstellungsverfahren für den Stromabnehmer bekannt.

Die US 2004/0091773 A1 offenbart eine Kathode für eine Lithiumbatterie, die aus einer Aluminiumfolie und einem aktiven Kathodenmaterial besteht.

Aufgabe der vorliegenden Erfindung ist es, eine Aluminiumfolie für Batterieelektroden anzugeben, deren Oberfläche kostengünstig konditioniert werden kann, wobei eine vergleichmäßigte Oberfläche mit guter Haftung für verschiedenartige Elektrodenbeschichtungen erreicht und zugleich ein effektiver elektrischer Kontakt zur Elektrodenbeschichtung ermöglicht wird. Außerdem sollte die erzeugte Oberfläche eine gute Korrosionsstabilität gegen die verwendeten Elektrolyte in einer Batteriezelle aufweisen. Zur Lösung dieser Aufgabe soll weiter ein Verfahren zur Herstellung einer Aluminiumfolie für Batterieelektroden angegeben werden.

Gemäß der Lehre der Erfindung wird diese Aufgabe mit einer Aluminiumfolie nach Patentanspruch 1, deren Verwendung nach Patentanspruch 7 und mit einem Verfahren nach Patentanspruch 8 gelöst.

Die Oberfläche der Aluminiumfolie ist zumindest teilweise mit einer Koronabehandlung entfettet und die Aluminiumfolie weist eine Oberflächenspannung von mindestens 34 mN/m auf.

Es hat sich herausgestellt, dass sich beispielsweise über eine gezielt dosierte Koronabehandlung hoher Energiedichte eine optimale Oberfläche der Aluminiumfolie für eine Verwendung als Substrat in einer Elektrode einer Batterie erzielen lässt. Durch diese gezielte Dosierung der Energiedichte lassen sich zudem die Eigenschaften der Oberfläche sehr genau kontrollieren und somit für verschiedene Elektrodenbeschichtungen anpassen.

Die Oberfläche der konditionierten Aluminiumfolie weist hierbei eine vorteilhafte Topographie aus dem Walzprozess sowie eine möglichst geringe Kühlschmierstoffbelegung auf. Insbesondere wird eine Oberflächenkonditionierung vorgenommen, die den Kühlschmierstoffanteil auf der Oberfläche reduziert, ohne dass die natürliche Oxidschichtdicke nennenswert aufwächst.

Mit der Verwendung als Substrat wird die Aluminiumfolie typischerweise in einem Schlitzgussverfahren beschichtet. Für eine möglichst genaue Einstellung der Nassfilmdicke und der Beschichtungsbreite sowie zum Erreichen einer homogenen Beschichtung ist eine gute Benetzbarkeit der Oberfläche der Aluminiumfolie mit einer Suspension der Elektrodenbeschichtung (mit einer Aufschlämmung bzw. Slurry) erforderlich. Die Benetzbarkeit hängt hierbei von den Oberflächenspannungen der Suspension und der Aluminiumfolie ab, wobei die Oberflächenspannung der Aluminiumfolie vorteilhafterweise höher ist als die Oberflächenspannung der Suspension. Mit einer Koronabehandlung unter einer definierten Energiedichte lässt sich die Oberflächenspannung der Aluminiumfolie ohne ein Aufwachsen der Oxidschicht prozesssicher einstellen und auch über die spezifische Auswahl des Energieeintrags derart beeinflussen, dass die Oberfläche der Aluminiumfolie für verschiedene Zusammensetzungen von Suspensionen geeignet ist.

Insbesondere wird hierbei neben einer Reduzierung der restlichen Belegung mit Kühlschmierstoffen eine Aktivierung der Oberfläche vorgenommen. Hieraus folgt eine besonders gute Anfangshaftung bei der Elektrodenbeschichtung.

Durch diese Form der Oberflächenkonditionierung wird darüber hinaus im Gegensatz zu einem Beizen der Oberfläche eine Beibehaltung der homogenen und vergleichsweise dünnen Walzoxidschicht erreicht. Diese Struktur der Oxidschicht ermöglicht ein zuverlässiges Durchdringen der Oxidschicht durch eine Aktivkomponente des Elektrodenmaterials, womit ein guter elektrischer Anschluss der Aluminiumfolie in der Batterie gewährleistet wird. Die vorhandene vergleichsweise dichte Oxidschicht ermöglicht eine gute Passivierung und damit einen hohen Korrosionsschutz der Aluminiumfolie. Die erfindungsgemäße Aluminiumfolie eignet sich durch die spezifische Topographie aus dem Walzprozess und die geringe Oxidschichtdicke nach der Oberflächenbehandlung auch hervorragend zum Ultraschallschweißen.

Es hat sich herausgestellt, dass mit dieser Oberflächenkonditionierung im Wesentlichen keine Entfestigung der Aluminiumfolie auftritt. Die Aluminiumfolie weist daher vorteilhafterweise einen kaltverfestigten Zustand auf, womit sich die erfindungsgemäße Aluminiumfolie durch das kaltverfestigte Gefüge von Aluminiumfolien für Batterieelektroden unterscheidet, welche beispielsweise über eine Wärmebehandlung oder eine Flammentfettung konditioniert werden.

Die Aluminiumfolie wird hierbei vorzugsweise aus dem walzfettigen, kaltverfestigten Zustand direkt der Koronabehandlung zugeführt. Die Oberfläche der Aluminiumfolie wird neben dem Walzprozess durch die Koronabehandlung eingestellt und erfährt insbesondere keine Wärmebehandlung, Flammentfettung und/oder chemische Entfettung.

Die Oberflächenspannung der Aluminiumfolie kann über die Dosierung der Energiedichte bei der Oberflächenkonditionierung spezifisch für verschiedene Arten von Elektrodenbeschichtungen eingestellt werden. Insbesondere wird die Oberflächenspannung der Aluminiumfolie über die Dosierung der Energiedichte derart eingestellt, dass die Oberflächenspannung der Aluminiumfolie höher ist als die Oberflächenspannung der Suspension der Elektrodenbeschichtung.

Die Oberflächenspannung entsprechender Suspensionen wird unter anderem durch die Lösungsmittel bestimmt, wobei oft nicht polares NMP mit optionalen Beimischungen für Elektrodenmaterialien verwendet wird. Aufgrund der gesundheitsschädlichen und explosiven Wirkung von NMP wird jedoch versucht, die Anteile an NMP zu reduzieren, was allerdings mit einer Steigerung der Oberflächenspannung den Suspensionen verbunden ist. Überraschenderweise hat sich herausgestellt, dass sich mit der erfindungsgemäßen Aluminiumfolie vergleichsweise hohe Oberflächenspannungen der Aluminiumfolie eingestellt werden können, so dass die erfindungsgemäße Aluminiumfolie auch mit Suspensionen mit geringen NMP-Gehalten und sogar rein wasserbasierten Suspensionen eingesetzt werden kann.

Die Oberflächenspannung kann mit guter Genauigkeit über die mit der Koronabehandlung eingebrachte Energiedichte kontrolliert werden. Insbesondere wird eine Oberflächenspannung von 34 mN/m bis 44 mN/m oder von 37 mN/m bis 44 mN/m für die Aluminiumfolie eingestellt, wobei hiermit gute Beschichtungsergebnisse bei optimierter Energiedichte erzielt werden.

In einer Ausgestaltung der Erfindung beträgt der Kontaktwinkel im Tropfentest auf der Oberfläche der Aluminiumfolie von 85° bis 45°. Mit dem Tropfentest wird ein Tropfen aus vollentsalztem Wasser mit einem Tropfenvolumen von 5 µl auf die Oberfläche der Aluminiumfolie gebracht. Unter Raumklimabedingungen (21 +/-2 °C, 50 +/- 10 % Luftfeuchte) wird der Kontaktwinkel des Tropfens mit dem Kontaktwinkelmessgerät Drop Shape Analyzer DSA10, welches vom Unternehmen Krüss kommerziell erhältlich ist, bestimmt. Der Kontaktwinkel im Tropfentest ist ein weiterer Indikator für die Benetzbarkeit und damit die Eignung der Aluminiumfolie für eine Verwendung als Substrat in Batterieelektroden, wobei kleinere Kontaktwinkel auf eine bessere Benetzbarkeit deuten. Mit Kontaktwinkeln im Tropfentest von 85° bis 45° lassen sich eine Vielzahl von Suspensionen für die Aluminiumfolie prozesssicher einsetzen. Insbesondere im Bereich von 55° bis 85° und im Bereich von 65° bis 80° werden gute Ergebnisse erzielt.

Neben der Oberflächenspannung ist weiter eine Entfernung der restlichen Kühlschmierstoffbelegung aus der Bereitstellung der Aluminiumfolie vorteilhaft für das Beschichtungsergebnis. Hierfür weist in einer Ausführungsform die Oberfläche der Aluminiumfolie einen Restgehalt an C von 1,0 mg/m² bis 3,0 mg/m² auf. Die Werte für den Restgehalt an C beziehen sich auf beide Seiten der Aluminiumfolie, so dass je Hauptfläche der Aluminiumfolie die Hälfte dieser Werte anzusetzen ist. Der Restgehalt an C ist näherungsweise proportional zur Kühlschmierstoffbelegung. Mit der Koronabehandlung können zusätzlich reduzierte Restgehalte an C eingestellt werden, um das Beschichtungsergebnis weiter zu verbessern. Der Restgehalt an C kann insbesondere von 1,0 mg/m² bis 2,7 mg/m² oder idealerweise von 1,0 mg/m² bis 2,0 mg/m² betragen.

Als vorteilhaft für die Haftung der Elektrodenbeschichtung auf der Oberfläche der Aluminiumfolie hat sich ebenso eine spezifische Oberflächentopografie herausgestellt. Die Oberflächentopografie wird maßgeblich durch den Schliff der Arbeitswalzen beim Fertigwalzen bestimmt, wobei diese Oberflächentopografie auch nach der Oberflächenkonditionierung beibehalten wird. Weist die Oberfläche der Aluminiumfolie eine Oberflächenrauigkeit Sa von 0,07 µm bis 0,12 µm auf, so wird eine besonders gute Haftbarkeit auch von verschiedenen Elektrodenmaterialien bewirkt.

Ferner weist eine vorteilhafte Oberfläche einer Aluminiumfolie eine spezifische Querrissigkeit 0,3 % bis 3,0 % auf. Die Querrissigkeit wird über den Flächenanteil angegeben, welcher von Vertiefungen bzw. (Quer-)Riefen mit einer Mindesttiefe von 0,5 µm relativ zur mittleren Oberflächenhöhe eingenommen wird, wobei diese Vertiefungen einen Ausbreitungsdurchmesser von mindestens 5 µm aufweisen. Der angegebene Bereich der Querrissigkeit hat sich für die Haftung einer Elektrodenbeschichtung als besonders vorteilhaft erwiesen.

Es hat sich zudem herausgestellt, dass die Oberfläche der Aluminiumfolie aufgrund der Koronabehandlung keine nennenswerte Zusatzoxidation durchläuft. Die Oberfläche der Aluminiumfolie kann in einer Ausführungsform eine Oxidschicht mit einer Dicke von 1,0 nm bis 4,0 nm aufweisen, womit aufgrund der vergleichsweise geringen Dicke der Oxidschicht eine gute Kontaktierung der Aluminiumfolie mit dem Elektrodenmaterial erreicht werden kann. Für die Kontaktierung haben sich Dicken von 2,0 nm bis 4,0 nm bewährt, wobei Oxidschichtdicken von 1,5 nm bis 3,5 nm und von 1,0 nm bis 3,0 nm zu einer weiteren Verbesserung der Kontaktierung führen können.

Die zuvor angegebenen Werte, die gezielt im Walzprozess und der Oberflächenbehandlung für die Oberflächenspannung, den Kontaktwinkel, den Restgehalt an C, die Oberflächenrauhigkeit, die Querrissigkeit und/oder die Dicke der Oxidschicht erzeugt werden können, gelten beispielsweise als Mittelwerte über eine Hauptfläche der Aluminiumfolie und charakterisieren damit die Oberfläche einer Batterieelektrodenfolie.

Über die Konditionierung kann auch eine in Bezug auf diese Eigenschaften besonders gleichmäßige Oberfläche eingestellt werden. In einer Ausführungsform beträgt die Abweichung der Oberflächenspannung, des Restgehalts an C, der Oberflächenrauigkeit und/oder der Dicke der Oxidschicht über die Breite einer Hauptfläche der Aluminiumfolie maximal 10 % vom jeweiligen Mittelwert, womit besonders homogene Oberflächeneigenschaften vorliegen.

In einer weiteren Ausgestaltung weist die Aluminiumfolie eine Passivierungsschicht auf, womit eine Korrosion an der Grenzfläche zwischen dem Aluminium und dem Elektrolyt unterbunden wird. Mit der Oberflächenbehandlung werden gute Passivierungseigenschaften der Aluminiumfolie erreicht, so dass sich insbesondere mit den Elektrolytbestandteilen der Batteriezelle Passivierungsschichten (z.B. umfassend AlF₃) zum verbesserten Korrosionsschutz ausbilden können.

In einer nächsten Ausgestaltung der Erfindung ist zumindest auf einem Abschnitt der Oberfläche der Aluminiumfolie eine Elektrodenbeschichtung angeordnet. Eine solche Elektrodenbeschichtung umfasst insbesondere mindestens ein Metalloxid, beispielsweise ein Lithium-Cobalt(III)-Oxid. Mit der Elektrodenbeschichtung ist die Aluminiumfolie insbesondere als Kathodenmaterial ausgestaltet.

Gemäß einer zweiten Lehre der Erfindung wird diese Aufgabe mit einem Verfahren zur Herstellung einer Aluminiumfolie für Batterieelektroden gelöst, wobei das Verfahren umfasst: Bereitstellen einer Aluminiumfolie aus einer Legierung des Typs AAlxxx, AA 3xxx und/oder AA 8xxx über einen Walzprozess; und Behandeln der Oberfläche der Aluminiumfolie im kaltverfestigten Zustand über eine Koronabehandlung, wobei eine Oberflächenspannung von mindestens 34 mN/m eingestellt wird. Insbesondere wird mit dem Verfahren gemäß der zweiten Lehre eine Aluminiumfolie gemäß der ersten Lehre hergestellt.

Das Bereitstellen der Aluminiumfolie über einen Walzprozess kann einen oder mehrere Warmwalz- und/oder Kaltwalzstiche umfassen. Hierzu kann ein Walzbarren direkt gegossen werden oder ein Bandguss mit anschließendem Walzen erfolgen. Die Aluminiumfolie wird nach einem Fertigwalzen der Koronabehandlung zugeführt, wobei sich die Aluminiumfolie im kaltverfestigten Zustand befindet. Durch die Koronabehandlung wird im Wesentlichen keine Entfestigung der Aluminiumfolie bewirkt, so dass der kaltverfestigte Gefügezustand auch nach der Oberflächenbehandlung im Wesentlichen erhalten bleibt.

In einer Ausführungsform wird die Aluminiumfolie auch im walzfettigen Zustand der Oberflächenbehandlung zugeführt, d.h. es werden insbesondere keine weiteren Entfettungsschritte wie ein Entfettungsglühen, ein Flammentfetten oder ein Beizen an der Aluminiumfolie vorgenommen. Die Oberflächenbehandlung nach dem Walzprozess besteht somit insbesondere lediglich in der Koronabehandlung. Denkbar ist es jedoch auch, dass weitere Methoden zur Oberflächenkonditionierung in Kombination mit einer Koronabehandlung durchgeführt werden, wobei mit den weiteren Methoden der kaltverfestigte Zustand erhalten bleibt.

Die Aluminiumfolie besteht aus einer Legierung des Typs AA 1xxx, AA 3xxx und/oder AA 8xxx. Aluminiumlegierungen des Typs AA 1xxx verursachen aufgrund der geringen Anteile an Legierungszusätzen nur sehr geringe unerwünschte chemische Prozesse zwischen der Elektrodenbeschichtung und der Oberfläche der Aluminiumfolie und weisen damit nur geringe Korrosionseffekte auf. Hierbei können unter anderem Legierungen des Typs AA 1050, AA 1100, AA 1200 oder AA 1085 verwendet werden, welche gegenüber Reinaluminium verbesserte mechanische Kennwerte aufweisen können. Die mechanischen Eigenschaften können über die Verwendung von Legierungen des Typs AA 3xxx sowie AA 8xxx zusätzlich verbessert werden.

Insbesondere wird die Koronabehandlung an der Oberfläche der Aluminiumfolie kontinuierlich durchgeführt, womit eine besonders homogene Struktur der Oberfläche und eine hohe Wirtschaftlichkeit erreicht werden. Beispielsweise wird die Koronabehandlung am Band durchgeführt. Hierfür kann die Koronabehandlung dem letzten Walzgerüst aus dem Walzprozess nachgeschaltet sein. Ebenso ist es möglich, dass die Koronabehandlung an der Oberfläche einer bandförmigen Aluminiumfolie in einem Reel-to-Reel-Prozess behandelt wird.

Mit der bei der Koronabehandlung verwendeten Energiedichte kann die Oberflächenspannung der Aluminiumfolie wesentlich beeinflusst werden. Es hat sich herausgestellt, dass insbesondere eine näherungsweise lineare Abhängigkeit der Oberflächenspannung von der Energiedichte in der Koronabehandlung vorliegt. Die Koronabehandlung wird erfindungsgemäß mit einer Energiedichte von 20 Wmin/m² bis 130 Wmin/m² durchgeführt, womit für verschiedene Elektrodenmaterialien geeignete Oberflächenspannungen eingestellt werden können. Mit einer Energiedichte von 20 Wmin/m² bis 130 Wmin/m² sind geeignete Oberflächenspannungen von 34 mN/m bis 44 mN/m realisierbar.

Im Rahmen der Erfindung hat sich herausgestellt, dass auch solche vergleichsweise hohen Energiedichten in einer Koronabehandlung einer Aluminiumfolie eingesetzt werden können. Insbesondere bei höheren Energiedichten kann eine Kühleinrichtung vorgesehen sein, welche die Aluminiumfolie vor, während und/oder nach der Koronabehandlung kühlt, um eine Entfestigung zu vermeiden.

In einer Ausgestaltung umfasst das Verfahren weiter: Beschichten der behandelten Oberfläche der Aluminiumfolie mit einer Elektrodenbeschichtung. Das Beschichten erfolgt insbesondere im Schlitzgussverfahren, wobei die durch eine Koronabehandlung konditionierte Aluminiumfolie mit einer Suspension benetzt und kalandriert wird. Insbesondere durch die Koronabehandlung erhält die Aluminiumfolie eine besonders gleichmäßige und benetzbare Oberfläche für einen Schlitzgussauftrag mit Elektrodenmaterial.

In einer Ausführungsform des Verfahrens wird eine Suspension mit geringen Gehalten an NMP bzw. vergleichbaren Lösungsmitteln verwendet. Insbesondere ist die Suspension wasserbasiert, d.h. insbesondere beruht die Suspension vorwiegend auf Wasser oder gänzlich auf Wasser. Die Suspension ist insbesondere frei von NMP. Mit der Koronabehandlung der Aluminiumfolie kann die Oberflächenspannung der Aluminiumfolie derart gesteigert werden, dass auch wasserbasierte Suspensionen prozesssicher zum Beschichten eingesetzt werden können.

In einer Ausführungsform des Verfahrens wird die Energiedichte der Koronabehandlung derart gewählt, dass die Oberflächenspannung der Aluminiumfolie mindestens so hoch ist wie die Oberflächenspannung einer Suspension der Elektrodenbeschichtung. Hiermit wird auch bei unterschiedlichen Suspensionssystemen eine gute Benetzung der Oberfläche der Aluminiumfolie gewährleistet. Die Benetzung kann weiter dadurch verbessert werden, dass die Energiedichte der Koronabehandlung derart gewählt wird, dass die Oberflächenspannung der Aluminiumfolie um mindestens 3 mN/m höher ist oder um mindestens 5mN/m höher ist als die Oberflächenspannung der Suspension der Elektrodenbeschichtung.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Lehren offenbart verstanden werden. Die Ausgestaltungen von Verfahrensmerkmalen gemäß der zweiten Lehre sollen insbesondere auch mögliche Ausgestaltungen der Aluminiumfolie gemäß der ersten Lehre betreffen und umgekehrt.

Weitere Ausgestaltungen und Vorteile der Erfindung sind in der folgenden detaillierten Beschreibung einiger beispielhafter Ausführungsformen der vorliegenden Erfindung, insbesondere in Verbindung mit der Zeichnung, zu entnehmen. Die Zeichnung zeigt in
- Fig. 1: eine Darstellung des Kontaktwinkels im Tropfentest in Abhängigkeit der Energiedichte;
- Fig. 2: eine Darstellung der Oberflächenspannung in Abhängigkeit der Energiedichte und
- Fig. 3: eine Darstellung des Kontaktwinkels im Tropfentest über die Breite einer erfindungsgemäßen Aluminiumfolie.

In einer Versuchsreihe wurden Oberflächen Aluminiumfolien aus einer Legierung des Typs AA 1100 über eine Koronabehandlung konditioniert und in einem Tropfentest die Oberflächenspannung bestimmt. Die Aluminiumfolien wurden hierbei aus dem kaltverfestigten, walzfettigen Zustand ohne weiteres Glühen oder chemische Entfettung direkt der Koronabehandlung zugeführt. Beim Walzen wurde ein Walzöl mit einem Siedebereich von 220 °C bis 240 °C gemäß DIN EN ISO 3405 verwendet.

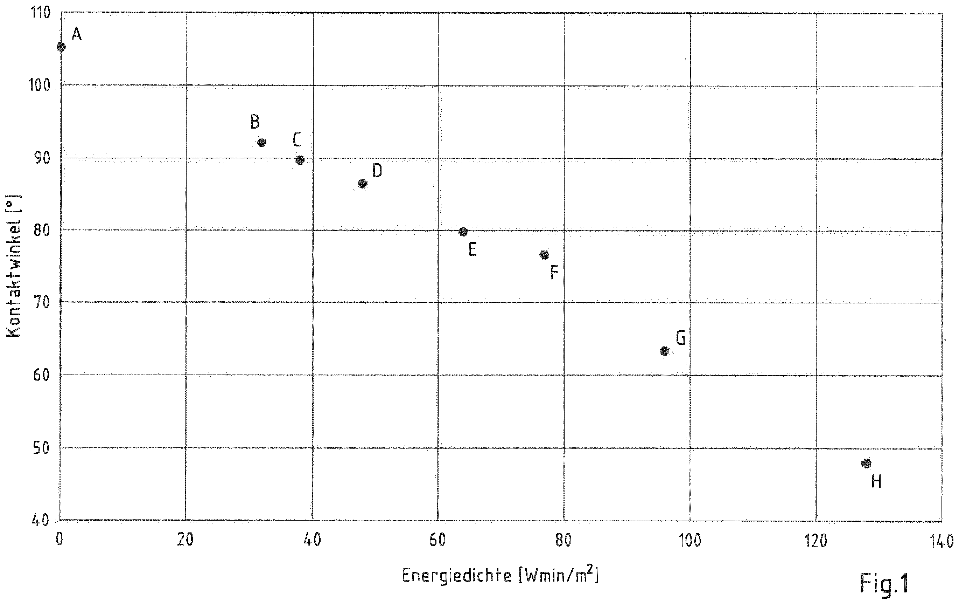

Die auf die Oberfläche eingebrachte Energiedichte wurde variiert, wobei Fig. 1 eine Darstellung des Kontaktwinkels im Tropfentest in Abhängigkeit der Energiedichte zeigt. Der Kontaktwinkel wurde mit vollentsalztem Wasser bei einem Tropfenvolumen von 5 µl mittels des Kontaktwinkelmessgeräts Drop Shape Analyzer DSA10 bestimmt, welches vom Unternehmen Krüss kommerziell erhältlich ist. Der Koronabehandlung lag eine Leistung von 5 kW zugrunde, wobei die Koronabehandlung kontinuierlich durchgeführt wurde. Die in Fig. 1 dargestellten Messpunkte sind Mittelwerte aus Einzelmessungen an jeweils vier Positionen an beiden Seiten bzw. Hauptflächen der Aluminiumfolie, wobei für jede Position mindestens 10 Messwerte ermittelt wurden.

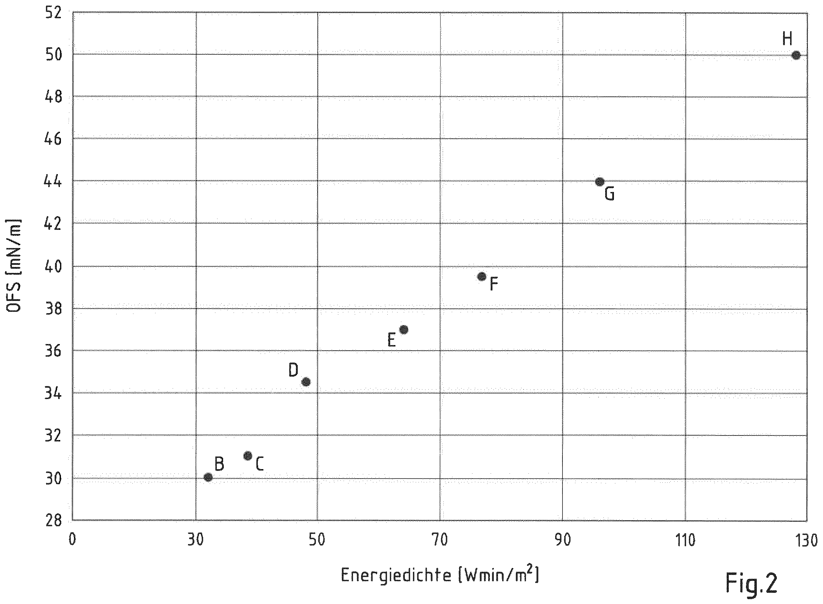

Aus Fig. 1 lässt sich erkennen, dass näherungsweise ein linearer Zusammenhang zwischen Kontaktwinkel und Energiedichte vorliegt. Fig. 2 zeigt entsprechend eine Darstellung der Oberflächenspannung OFS in Abhängigkeit der Energiedichte für die gleiche Versuchsreihe und die Proben "B" bis "H". Dabei handelt es sich bei den Proben "B", "C" und "H" um nicht erfindungsgemäße Proben mit einer Oberflächenspannung außerhalb des Bereichs von mindestens 34 mN/m bis 44 mN/m und bei den Proben "D" bis "G" um erfindungsgemäße Proben mit einer Oberflächenspannung im Bereich von mindestens 34 mN/m bis 44 mN/m.

Die Probe "A" diente als Vergleichsprobe ohne Koronabehandlung, wobei der hohe Kontaktwinkel von etwa 105° auf eine eher schlechte Benetzbarkeit hinweist. Die Oberflächenspannung der Probe "A" lag deutlich unter 34 mN/m.

Bereits für die Probe "B", welche mit einer Koronabehandlung unter einer Energiedichte von 32 Wmin/m² behandelt wurde, zeigte sich im Tropfentest ein Kontaktwinkel von fast 90°. Der Kontaktwinkel für die Proben "C" bis "H" konnte mit steigender Energiedichte weiter reduziert bzw. die Oberflächenspannung gesteigert werden. Die Probe "H" erreichte hierbei einen Wert von 50 mN/m für die Oberflächenspannung. Mit entsprechenden Oberflächenspannungen kann eine gute Benetzbarkeit mit einer Suspension beim Beschichten der Aluminiumfolie erzielt werden, wodurch eine hervorragende Haftbarkeit des Elektrodenmaterials mit einem gleichmäßigen Auftrag der Beschichtung gewährleistet wird.

Die Haftbarkeit auf den erfindungsgemäßen Aluminiumfolie wird weiter dadurch verbessert, dass die Oberfläche der erfindungsgemäßen Aluminiumfolien lediglich einen Restgehalt an C von 1,0 mg/m² bis 3,0 mg/m² und insbesondere von 1,0 mg/m² bis 2,0 mg/m² aufwiesen. Die walzfettige Vergleichsprobe "A" wies dagegen einen Restgehalt an C von mehr als 4,0 mg/m² auf. Mit der Koronabehandlung wurde folglich eine effektive Entfettung der Oberfläche der Aluminiumfolie bewirkt.

Zur Bestimmung der Haftbarkeit der Beschichtung wurde nach dem Beschichten und Trocknen durch eine Adhäsionsprüfung im Schälversuch bestimmt. Für die Proben "B" bis "H" ergab sich hierbei eine gute Haftbarkeit des Elektrodenmaterials. Eine sehr gute Haftbarkeit des Elektrodenmaterials erreichten die erfindungsgemäßen Proben "D" bis "G" im Schälversuch.

Über die Variation der Energiedichte der Koronabehandlung kann zudem wie aus Fig. 2 ersichtlich die Oberflächenspannung spezifisch auf die zu verwendende Beschichtung angepasst werden, wobei insbesondere die Energiedichte so gewählt wird, dass die Oberflächenspannung der Aluminiumfolie mindestens so hoch ist wie die Oberflächenspannung der Suspension.

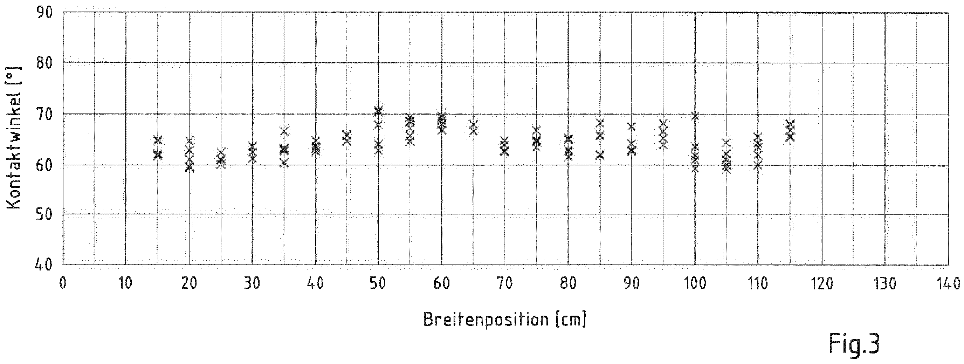

Über die Koronabehandlung wird zudem eine über die Oberfläche der Aluminiumfolie besonders gleichmäßige Struktur erreicht. Fig. 3 zeigt hierzu eine Darstellung des Kontaktwinkels im Tropfentest über die Breite einer erfindungsgemäßen Aluminiumfolie, wobei der Kontaktwinkel an der Probe "G" der zuvor beschriebenen Versuchsreihe gemessen wurde. Die Abweichungen des Kontaktwinkels über die Breite der Aluminiumfolie sind hierbei sehr gering und liegen unterhalb von 10 % vom Mittelwert.

Für die Probe "H", welche mit der höchsten Energiedichte in der Koronabehandlung konditioniert wurde, wurde die Oxidschichtdicke vermessen. Die Oxidschichtdicke wurde mittels einer IR-Messung ermittelt, wobei die Extinktion der AlO-Gruppen im Bereich von etwa 950 cm⁻¹ als charakteristisches Merkmal für die Oxidschichtdicke herangezogen wurde. Bei der Probe "H" ergaben sich hierbei Werte zwischen 2,5 nm und 2,7 nm mit einem Mittelwert von 2,6 nm für die Dicke der Oxidschicht. Diese Werte entsprechen der Oxidschichtdicke der unbehandelten Vergleichsprobe "A". Folglich war mit der Koronabehandlung auch bei hohen Energiedichten kein nennenswertes Aufwachsen der Oxidschicht festzustellen.

Die Oberfläche der Aluminiumfolien wiesen zudem eine Oberflächenrauigkeit Sa von 0,07 µm bis 0,12 µm und eine Querrissigkeit von 0,3 % bis 3,0 % auf, was insbesondere die Haftfähigkeit der Beschichtung weiter steigerte.

Ebenfalls wurden die mechanischen Kennwerte Rp0,2, Rm, Ag und A100 der unbehandelten Vergleichsprobe "A" und der Probe "H" miteinander verglichen. Aus den mechanischen Kennwerten geht hierbei hervor, dass mit der Koronabehandlung im Wesentlichen keine Entfestigung der Aluminiumfolie eintritt. Die Aluminiumfolie befindet sich daher im kaltverfestigten Zustand. Hierbei liegen für die Proben "A" und "H" insbesondere die Werte von Rp0,2 bei mindestens 220 MPa und von Rm bei mindestens 266 MPa.

## Patentansprüche

1. Aluminiumfolie für zumindest abschnittsweise eine Elektrodenbeschichtung aufweisende Batterieelektroden,
- wobei die Aluminiumfolie aus einer Legierung des Typs AAlxxx, A3xxx und/oder AA 8xxx besteht und
- wobei die Aluminiumfolie einen kaltverfestigten Zustand aufweist,
- wobei die Oberfläche der Aluminiumfolie zumindest teilweise mit einer Koronabehandlung entfettet und für eine Elektrodenbeschichtung vorbereitet ist,
- wobei die Aluminiumfolie eine Oberflächenspannung von mindestens 34 mN/m bis 44 mN/m aufweist,
**dadurch gekennzeichnet, dass**
- die Oberfläche der Aluminiumfolie eine Oberflächenrauigkeit Sa von 0,07 µm bis 0,12 µm aufweist.

2. Aluminiumfolie gemäß Anspruch 1,
wobei der Kontaktwinkel im Tropfentest auf der Oberfläche der Aluminiumfolie von 85° bis 45° beträgt, insbesondere von 55° bis 85° oder von 65° bis 80°.

3. Aluminiumfolie nach einem der vorhergehenden Ansprüche,
wobei die Oberfläche der Aluminiumfolie einen Restgehalt an C von 1,0 mg/m² bis 3,0 mg/m² aufweist,
insbesondere einen Restgehalt an C von 1,0 mg/m² bis 2,7 mg/m² oder von 1,0 mg/m² bis 2,0 mg/m².

4. Aluminiumfolie nach einem der vorhergehenden Ansprüche,
wobei die Oberfläche der Aluminiumfolie eine Querrissigkeit von 0,3 % bis 3,0 % aufweist.

5. Aluminiumfolie nach einem der vorhergehenden Ansprüche,
wobei die Oberfläche der Aluminiumfolie eine Oxidschicht mit einer Dicke von 1,0 nm bis 4,0 nm aufweist,
insbesondere mit einer Dicke von 2,0 nm bis 4,0 nm, von 1,5 nm bis 3,5 nm oder von 1,0 nm bis 3,0 nm.

6. Aluminiumfolie nach einem der vorhergehenden Ansprüche,
wobei zumindest auf einem Abschnitt der Oberfläche der Aluminiumfolie eine Elektrodenbeschichtung angeordnet ist.

7. Verwendung einer Aluminiumfolie nach einem der vorhergehenden Ansprüche zur Bereitstellung zumindest abschnittsweise eine Elektrodenbeschichtung aufweisende Batterieelektroden, wobei die Korona behandelte Oberfläche der Aluminiumfolie mit einer Elektrodenbeschichtung beschichtet wird.

8. Verfahren zur Herstellung einer Aluminiumfolie für Batterieelektroden,
das Verfahren umfassend:
- Bereitstellen einer Aluminiumfolie aus einer Legierung des Typs AAlxxx, AA 3xxx und/oder AA 8xxx über einen Walzprozess; und
- Behandeln der Oberfläche der Aluminiumfolie im kaltverfestigten Zustand über eine Koronabehandlung, wobei eine Oberflächenspannung von mindestens 34 mN/m bis 44 mN/m eingestellt wird,
**dadurch gekennzeichnet, dass**
- die Koronabehandlung mit einer Energiedichte von 20 Wmin/m² bis 130 Wmin/m² durchgeführt wird und
- durch das Fertigwalzen mit geschliffenen Arbeitswalzen die Oberfläche der Aluminiumfolie eine Oberflächenrauigkeit Sa von 0,07 µm bis 0,12 µm aufweist.

9. Verfahren nach Anspruch 8,
wobei die Koronabehandlung kontinuierlich durchgeführt wird.

10. Verfahren nach Anspruch 8 oder 9, weiter umfassend:
- Beschichten der behandelten Oberfläche der Aluminiumfolie mit einer Elektrodenbeschichtung.

11. Verfahren nach Anspruch 10,
- wobei die Energiedichte der Koronabehandlung derart gewählt wird, dass die Oberflächenspannung der Aluminiumfolie mindestens so hoch ist wie die Oberflächenspannung einer Suspension der Elektrodenbeschichtung, insbesondere derart, dass die Oberflächenspannung der Aluminiumfolie um mindestens 3 mN/m höher ist oder um mindestens 5mN/m höher ist als die Oberflächenspannung einer Suspension der Elektrodenbeschichtung.

## Claims

1. Aluminium foil for battery electrodes having an electrode coating at least in sections,
- wherein the aluminium foil is made of an alloy of the type AAlxxx, A3xxx and/or AA 8xxx and
- wherein the aluminium foil has a work-hardened state,
- wherein the surface of the aluminium foil is at least partially degreased with a corona treatment and prepared for an electrode coating,
- wherein the aluminium foil has a surface tension of at least 34 mN/m to 44 mN/m,
**characterised in that**
- the surface of the aluminium foil has a surface roughness Sa of 0.07 µm to 0.12 µm.

2. Aluminium foil according to claim 1,
wherein the contact angle in the drop test on the surface of the aluminium foil is from 85° to 45°, in particular from 55° to 85° or from 65° to 80°.

3. Aluminium foil according to any one of the preceding claims,
wherein the surface of the aluminium foil has a residual C content of 1.0 mg/m² to 3.0 mg/m²,
in particular a residual C content of 1.0 mg/m² to 2.7 mg/m² or 1.0 mg/m² to 2.0 mg/m².

4. Aluminium foil according to any one of the preceding claims,
wherein the surface of the aluminium foil has a transverse fissuring of 0.3% to 3.0%.

5. Aluminium foil according to any one of the preceding claims,
wherein the surface of the aluminium foil has an oxide layer with a thickness of 1.0 nm to 4.0 nm,
in particular with a thickness of 2.0 nm to 4.0 nm, of 1.5 nm to 3.5 nm or of 1.0 nm to 3.0 nm.

6. Aluminium foil according to any one of the preceding claims,
wherein an electrode coating is disposed on at least a section of the surface of the aluminium foil.

7. Use of an aluminium foil according to any one of the preceding claims for providing battery electrodes having an electrode coating at least in sections, wherein the corona treated surface of the aluminium foil is coated with an electrode coating.

8. Method for the manufacture of an aluminium foil for battery electrodes,
the method comprising:
- providing an aluminium foil made of an alloy of the type AAlxxx, AA 3xxx and/or AA 8xxx via a rolling process; and
- treating the surface of the aluminium foil in the work-hardened state via a corona treatment, wherein a surface tension of at least 34 mN/m to 44 mN/m is adjusted,
**characterised in that**
- the corona treatment is carried out with an energy density of 20 Wmin/m² to 130 Wmin/m² and
- by finish rolling with ground work rolls, the surface of the aluminium foil has a surface roughness Sa of 0.07 µm to 0.12 µm.

9. Method according to claim 8,
wherein the corona treatment is carried out continuously.

10. Method according to claim 8 or 9, further comprising:
- coating the treated surface of the aluminium foil with an electrode coating.

11. Method according to claim 10,
- wherein the energy density of the corona treatment is selected such that the surface tension of the aluminium foil is at least as high as the surface tension of a suspension of the electrode coating,
in particular such that the surface tension of the aluminium foil is at least 3 mN/m higher or at least 5mN/m higher than the surface tension of a suspension of the electrode coating.

## Revendications

1. Feuille d'aluminium pour des électrodes de batterie présentant, au moins par sections, un revêtement d'électrode,
- la feuille d'aluminium étant constituée d'un alliage de type AA1xxx, A3xxx et/ou AA 8xxx, et
- la feuille d'aluminium présentant un état écroui,
- la surface de la feuille d'aluminium étant au moins partiellement dégraissée par un traitement corona et préparée pour un revêtement d'électrode,
- la feuille d'aluminium présentant une tension de surface d'au moins 34 mN/m à 44 mN/m,
**caractérisée en ce que**
- la surface de la feuille d'aluminium présente une rugosité de surface Sa de 0,07 µm à 0,12 µm.

2. Feuille d'aluminium selon la revendication 1,
l'angle de contact dans le test de goutte sur la surface de la feuille d'aluminium étant de 85° à 45°, en particulier de 55° à 85° ou de 65° à 80°.

3. Feuille d'aluminium selon l'une quelconque des revendications précédentes,
la surface de la feuille d'aluminium ayant une teneur résiduelle en C de 1,0 mg/m² à 3,0 mg/m²,
en particulier une teneur résiduelle en C de 1,0 mg/m² à 2,7 mg/m² ou de 1,0 mg/m² à 2,0 mg/m².

4. Feuille d'aluminium selon l'une quelconque des revendications précédentes, la surface de la feuille d'aluminium présentant une fissuration transversale de 0,3 % à 3,0 %.

5. Feuille d'aluminium selon l'une quelconque des revendications précédentes,
la surface de la feuille d'aluminium présentant une couche d'oxyde d'une épaisseur de 1,0 nm à 4,0 nm,
en particulier d'une épaisseur de 2,0 nm à 4,0 nm, de 1,5 nm à 3,5 nm ou de 1,0 nm à 3,0 nm.

6. Feuille d'aluminium selon l'une quelconque des revendications précédentes, un revêtement d'électrode étant disposé sur au moins une section de la surface de la feuille d'aluminium.

7. Utilisation d'une feuille d'aluminium selon l'une quelconque des revendications précédentes pour le fournissage d'électrodes de batterie présentant, au moins par sections, un revêtement d'électrode, la surface subie de traitement corona de la feuille d'aluminium étant revêtue d'un revêtement d'électrode.

8. Procédé pour la fabrication d'une feuille d'aluminium pour des électrodes de batterie, le procédé comprenant :
- le fournissage d'une feuille d'aluminium constituée d'un alliage du type AA1xxx, AA 3xxx et/ou AA 8xxx par un processus de laminage ; et
- le traitement de la surface de la feuille d'aluminium à l'état écroui par un traitement corona, une tension de surface d'au moins 34 mN/m à 44 mN/m étant établie,
**caractérisé en ce que**
- le traitement corona est effectué avec une densité d'énergie de 20 Wmin/m² à 130 Wmin/m², et
- par le laminage de finition avec des rouleaux de travail aiguisées, la surface de la feuille d'aluminium présente une rugosité de surface Sa de 0,07 µm à 0,12 µm.

9. Procédé selon la revendication 8,
le traitement corona étant effectué en continu.

10. Procédé selon la revendication 8 ou 9, comprenant en outre :
- le revêtement de la surface traitée de la feuille d'aluminium avec un revêtement d'électrode.

11. Procédé selon la revendication 10,
- la densité d'énergie du traitement corona étant choisie de telle sorte que la tension de surface de la feuille d'aluminium est au moins aussi élevée que la tension de surface d'une suspension du revêtement d'électrode,
en particulier de telle sorte que la tension de surface de la feuille d'aluminium est supérieure d'au moins 3 mN/m ou supérieure d'au moins 5mN/m à la tension de surface d'une suspension du revêtement d'électrode.
